# EUROPEAN PATENT APPLICATION

(11) **EP 3 890 420 A1**
(43) Date of publication of application: **06.10.2021**
(21) Application number: 19891234.7
(22) Date of filing: 24.10.2019
(51) Int. Cl.: H04W 72/04

(54) **DATA DEMODULATION AND PROCESSING METHOD AND APPARATUS**

(30) Priority: 28.11.2018 CN 201811436016
(71) Applicant: ZTE Corporation, Shenzhen, Guangdong 518057 (CN)
(72) Inventor: FEI, Peiyan, Shenzhen, Guangdong 518057 (CN)
(74) Representative: Mozzi, Matteo
(86) International application number: PCT/CN2019/113075
(87) International publication number: WO 2020/108184

(57) **Abstract**

Provided is a data demodulation and processing method and device. The data demodulation method includes: after determining a configuration mode for a Demodulation Reference Signal (DMRS) in the uplink sending of an Uplink Pilot Time Slot (UpPTS), a system side device receives uplink data sent by a User Equipment (UE) according to the configuration mode for the DMRS; and the system side device performs feature extraction on the uplink data, and determines data demodulation information in combination with the uplink data. By means of embodiments of the present invention, the problems in the related art of demodulation performance influence and demodulation risk brought about when data demodulation is performed based on a single DMRS or without configuring a DMRS are solved, thereby achieving the beneficial effects of improving the demodulation performance of uplink data and improving the user experience.

## Description

The present invention claims priority to Chinese Patent Application No. 201811436016.1, filed to the China National Intellectual Property Administration on November 28, 2018 and entitled "Data Demodulation and Processing Method and Device", the invention of which is hereby incorporated by reference in its entirety.

### Technical Field

Embodiments of the present invention relates to the field of communications, in particular to a data demodulation and processing method and device.

### Background

Commercialization of a Long Term Evolution (LTE) network has spread to many countries, the number of commercial users is increasing rapidly, and the traffic used by the users in commercial networks is growing rapidly. One of the key technologies of an LTE system is multi-antenna wireless transmission technology. The multi-antenna wireless transmission technology is a powerful tool to solve the throughput problem, can improve the utilization rate of space resources, improve spectrum efficiency, and achieve the purpose of enhancing customer experience and increasing system capacity. A Multiple-Input Multiple-Output (MIMO) wireless transmission technology can fully exploit space resources and improve spectrum utilization, which is also the key to it becoming the research of the 3rd Generation Partnership Project (3GPP) of the new-generation mobile communication standards. The MIMO technology can make full use of time-frequency resources and obtain better system capacity by reusing the time-frequency resources in space through user data. In a Time Division Long Term Evolution (TD LTE) system, the potential of the MIMO technology is fully exploited, but there is still a risk that the uplink throughput will not be able to better meet customers' needs in the future. In the version 3GPP R14, a new technology is introduced, that is, a Special Sub-Frame (SSF) 10. It is stipulated that uplink data transmitted through a Physical Uplink Shared Channel (PUSCH) can be transmitted in an Uplink Pilot Time Slot (UpPTS) physical channel portion of the SSF10, so as to alleviate future problems caused by insufficient uplink resources.

The R14 stipulates that users can transmit data in the UpPTS of SSF10 to improve uplink data traffic. When data is sent on the SSF10, the upper level can configure that a Demodulation Reference Signal (DMRS) is sent in the UpPTS, and can also configure that there is no DMRS sent in the UpPTS.

When the upper layer configures the DMRS for data demodulation during the sending of the uplink data, because there is only one DMRS uplink sending symbol on the SSF10, the performance of PUSCH demodulation based on a single DMRS symbol cannot be guaranteed when the terminal is in a moving state.

If the upper level does not configure the DMRS for data demodulation when sending the uplink data in the UpPTS of the SSF10, a base station is required to schedule the data of the next conventional uplink sub-frame U while scheduling the data in the UpPTS, so as to ensure that the data sent in the UpPTS without the uplink sending of the DMRS can be properly demodulated. However, if the base station performs data demodulation after receiving the UpPTS and the conventional uplink sub-frame U, there will be problems of excessive memory consumption and excessively long data processing delay, which will cause a data processing procedure of the whole system to crash.

### Summary

The embodiments of the present invention provide a data demodulation and processing method and device to at least solve the problems in the related art of demodulation performance influence and demodulation risk brought about when data demodulation is performed based on a single DMRS or without configuring a DMRS in the uplink sending of an UpPTS.

According to an embodiment of the present invention, a data demodulation method is provided, which may include: after determining a configuration mode for a DMRS in the uplink sending of an UpPTS, a system side device receives uplink data sent by a User Equipment (UE) according to the configuration mode for the DMRS; and the system side device performs feature extraction on the uplink data, and determines data demodulation information in combination with the uplink data.

In an embodiment, before the system side device receives the uplink data sent by the UE, the method may further include: the system side device determines and transmits to the UE indication information for indicating Sounding Reference Signal (SRS) uplink sending modes corresponding to the uplink data sent by the UE.

In an embodiment, the SRS uplink sending modes may at least include: a periodic SRS uplink sending mode or a non-periodic SRS uplink sending mode.

In an embodiment, the indication information is determined at least by the following way: when the data is scheduled, the system side device judges whether there is a corresponding periodic SRS to send at the same time when the data is sent; if the judgment result is yes, the system side device sends a periodic SRS uplink sending indication to the UE; and if the judgment result is no, the system side device sends a non-periodic SRS uplink sending indication to the UE.

In an embodiment, the method may further include that: the system side device configures SRS uplink sending resources to the UE.

In an embodiment, that the system side device performs feature extraction on the uplink data may include that: when the DMRS is configured in the UpPTS, the system side device extracts a Channel Impulse Response (CIR) of the data according to DMRS information and SRS information in the uplink data.

In an embodiment, that the system side device performs feature extraction on the uplink data may include that: when there is no DMRS configured in the UpPTS, the system side device extracts the CIR of the data according to the SRS information in the uplink data.

According to another embodiment of the present invention, a data processing method is provided, which may include that: the UE determines and transmits to the system side device corresponding uplink data according to the configuration mode for the DMRS that is determined in the uplink sending of the UpPTS and sent by the system side device. The uplink data is used for the system side device to determine the data demodulation information.

In an embodiment, the UE receives indication information about the SRS uplink sending modes which is sent by the system side device; and the UE determines the DMRS and the SRS in the uplink data according to the indication information and the configuration mode for the DMRS.

In an embodiment, the SRS uplink sending modes may at least include: the periodic SRS uplink sending mode or the non-periodic SRS uplink sending mode.

According to another embodiment of the present invention, a data demodulation device is provided, which is in the system side device and may include: a receiving module, configured to receive, after determining the configuration mode for the DMR in the uplink sending of the UpPTS, the uplink data sent by the UE according to the configuration mode for the DMRS; and a determining module, configured to perform feature extraction on the uplink data, and determine the data demodulation information in combination with the uplink data.

According to another embodiment of the present invention, a data processing device is provided, which is in the UE and may include: a processing module, configured to determine and transmit to the system side device the corresponding uplink data according to the configuration mode for the DMRS that is determined in the uplink sending of the UpPTS and sent by the system side device. The uplink data is used for the system side device to determine the data demodulation information.

According to yet another embodiment of the present invention, a storage medium is also provided. The storage medium stores a computer program. The computer program is configured to execute, when running, steps in any of the above method embodiments.

According to yet another embodiment of the present invention, an electronic device is also provided, which may include a memory and a processor. The memory stores a computer program. The processor is configured to run the computer program, so as to execute steps in any of the above method embodiments.

Through the embodiments of the present invention, a system side performs feature extraction through the data which is determined by the UE for different configuration modes for the DMRS, so as to determine the data demodulation information, so the problems in the related art of demodulation performance influence and demodulation risk brought about when data demodulation is performed based on a single DMRS or without configuring a DMRS can be solved, thereby achieving the effects of improving the demodulation performance of uplink data and improving the user experience.

### Brief Description of the Drawings

The accompanying drawings described here are used for providing further understanding of the embodiments of the present invention, and constitute a part of the embodiments of the present invention. Schematic embodiments of the present invention and description thereof are used for illustrating the present invention and not intended to form an improper limit to the present invention. In the accompanying drawings:
Fig. 1 is a structural block diagram of hardware of an electronic device in a data demodulation method according to an embodiment of the present invention;
Fig. 2 is a flowchart of a data demodulation method according to an embodiment of the present invention;
Fig. 3 is a flowchart of a data processing method according to an embodiment of the present invention;
Fig. 4 is a structural block diagram of a data demodulation device according to an embodiment of the present invention; and
Fig. 5 is a structural block diagram of a data processing device according to an embodiment of the present invention.

### Detailed Description of the Embodiments

The present invention is elaborated below with reference to the accompanying drawings and embodiments. It is to be noted that the embodiments in the invention and characteristics in the embodiments may be combined without conflicts.

It is to be noted that the terms like "first" and "second" in the specification, claims and accompanying drawings of the invention are used for differentiating the similar objects, but do not have to describe a specific order or a sequence.

### First embodiment

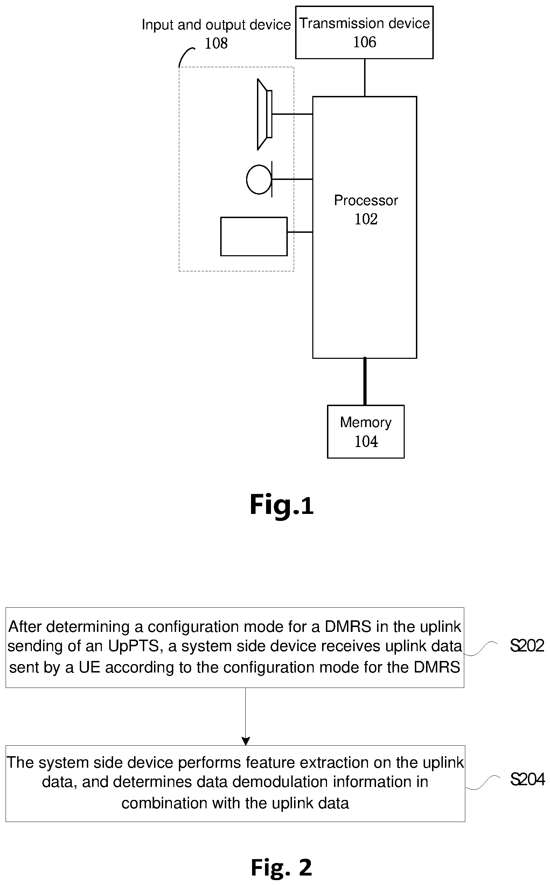

The method embodiment provided by the first embodiment of the present invention may be performed in a mobile terminal, a computer terminal or an electronic device, and other similar operating devices. By taking that the method is performed on an electronic device as an example, Fig. 1 is a structure diagram of hardware of an electronic device in a data demodulation method according to an embodiment of the present invention. As shown in Fig. 1, the electronic device 10 may include one or more (only one is shown here) processors 102 (the processor 102 may include, but not limited to, a Micro Processor Unit (MCU) or a Field Programmable Gate Array (FPGA), and other processing devices), a memory 104 for storing data. In an embodiment, the electronic device may also include a transmission device 106 for a communication function and an input and output device 108. Those of ordinary skill in the art should know that the structure shown in Fig. 1 is only schematic and not intended to limit the structure of the electronic device. For example, the electronic device 10 may further include more or fewer components than the components shown in Fig. 1, or has a configuration different from that shown in Fig. 1.

The memory 104 may be configured to store a computer program, for example, a software program and a module of invention software, for example, a computer program corresponding to the data demodulation method in the embodiments of the present invention. The processor 102 runs the computer program stored in the memory 104, thereby executing various functional inventions and data processing, namely implementing the above method. The memory 104 may include a high-speed random access memory and may also include a nonvolatile memory, for example, one or more magnetic storage devices, flash memories or other nonvolatile solid-state memories. In some examples, the memory 104 may in an embodiment include a memory arranged remotely relative to the processor 102 and the remote memory may be connected to the electronic device 10 through a network. An example of the network includes, but not limited to, the Internet, an Intranet, a local area network, a mobile communication network and a combination thereof.

The transmission device 106 is configured to receive or send data through a network. A specific example of the network may include a wireless network provided by a communication provider of the electronic device 10. In an example, the transmission device 106 includes a Network Interface Controller (NIC), which may be connected with other network devices through a base station, thereby communicating with the Internet. In an example, the transmission device 106 may be a Radio Frequency (RF) module, which is configured to communicate with the Internet in a wireless manner.

In the present embodiment, a data demodulation method running on the electronic device is provided. Fig. 2 is a flowchart of a data demodulation method according to an embodiment of the present invention. As shown in Fig. 2, the flow includes the following steps.

At S202, after determining a configuration mode for a DMRS in the uplink sending of an UpPTS, a system side device receives uplink data sent by a UE according to the configuration mode for the DMRS.

At S204, the system side device performs feature extraction on the uplink data, and determines data demodulation information in combination with the uplink data.

It is to be noted that the UE in the present embodiment is the UE that the system side device instructs to uplink data in the UpPTS.

In an embodiment, before the system side device receives the uplink data sent by the UE, the method may further include that: the system side device determines and transmits to the UE indication information for indicating SRS uplink sending modes corresponding to the uplink data sent by the UE.

In an embodiment, the SRS uplink sending modes at least include: a periodic SRS uplink sending mode or a non-periodic SRS uplink sending mode.

In an embodiment, the indication information is determined at least by the following way: when the data is scheduled, the system side device judges whether there is a corresponding periodic SRS to send at the same time when the data is sent; if the judgment result is yes, the system side device sends a periodic SRS uplink sending indication to the UE; and if the judgment result is no, the system side device sends a non-periodic SRS uplink sending indication to the UE.

In an embodiment, the method further includes that: the system side device configures SRS uplink sending resources to the UE.

It is to be noted that there is no significant precedence relationship between instructing, by the system side device, the UE to send a periodic SRS or a non-periodic SRS and allocating the SRS uplink sending resources to the UE. It can be understood that both can be done at the same time, of course, it is also possible to allocate the SRS uplink sending resources, and then instruct the UE to send the periodic SRS or the non-periodic SRS. Or, after the UE is instructed to send the periodic SRS or the non-periodic SRS, the SRS uplink sending resources corresponding to instructing are configured.

In an embodiment, that the system side device performs feature extraction on the uplink data may include that: when the DMRS is configured in the UpPTS, the system side device extracts a CIR of the data according to DMRS information and SRS information in the uplink data.

In an embodiment, that the system side device performs feature extraction on the uplink data may include that: when the DMRS is configured in the UpPTS, the system side device extracts a CIR of the data according to DMRS information and SRS information in the uplink data.

By means of the above steps, the problems in the related art of demodulation performance influence and demodulation risk brought about when data demodulation is performed based on a single DMRS or without configuring a DMRS are solved, thereby achieving the effects of improving the demodulation performance of uplink data and improving the user experience.

Through the above description of the implementations, those skilled in the art may clearly know that the method according to the above embodiments may be implemented by means of software plus a necessary common hardware platform, certainly by means of hardware; but in many cases, the former is the better implementation. Based on this understanding, the technical solution of the present invention substantially or the part making a contribution to the related technology can be embodied in the form of software product; the computer software product is stored in a storage medium (for example, a Read-Only Memory (ROM)/Random Access Memory (RAM), a magnetic disk, and a compact disc) and includes a number of instructions to make a computer device (which can be a personal computer, a server or a network device, etc.) perform all or part of the method in each embodiment of the present invention.

### Second embodiment

In the present embodiment, a data processing method running on the electronic device is provided.

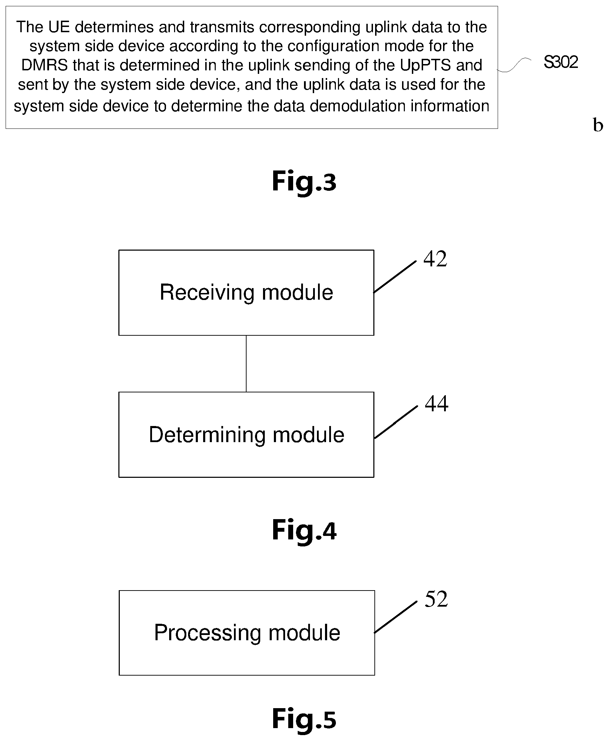

Fig. 3 is a flowchart of a data processing method according to an embodiment of the present invention. As shown in Fig. 3, the flow includes the following steps.

At S302, the UE determines and transmits to the system side device corresponding uplink data according to the configuration mode for the DMRS that is determined in the uplink sending of the UpPTS and sent by the system side device. The uplink data is used for the system side device to determine the data demodulation information.

In an embodiment, the UE receives indication information about the SRS uplink sending modes which is sent by the system side device; and the UE determines the DMRS and the SRS in the uplink data according to the indication information and the configuration mode for the DMRS.

In an embodiment, the SRS uplink sending modes at least include: the periodic SRS uplink sending mode or the non-periodic SRS uplink sending mode.

By means of the above steps, the problems in the related art of demodulation performance influence and demodulation risk brought about when data demodulation is performed based on a single DMRS or without configuring a DMRS are solved, thereby achieving the effects of improving the demodulation performance of uplink data and improving the user experience.

Through the above description of the implementations, those skilled in the art may clearly know that the method according to the above embodiments may be implemented by means of software plus a necessary common hardware platform, certainly by means of hardware; but in many cases, the former is the better implementation. Based on this understanding, the technical solution of the present invention substantially or the part making a contribution to the related technology can be embodied in the form of software product; the computer software product is stored in a storage medium (for example, a Read-Only Memory (ROM)/Random Access Memory (RAM), a magnetic disk, and a compact disc) and includes a number of instructions to make a computer device (which can be a personal computer, a server or a network device, etc.) perform all or part of the method in each embodiment of the present invention.

Specifically, based on the above embodiments, the following four scenarios are also provided to understand the technical solutions in the embodiments.

### First scenario

At S1, a system indicates the UE that it can send data in the UpPTS and configures the DMRS to be sent in the UpPTS.

At S2, the system side configures non-periodic SRS uplink sending resources to the UE, and periodic SRS uplink sending resources may or may not be configured.

At S3, when the uplink data is scheduled through DCI0 or 4, if there is no corresponding periodic SRS sent at the same time when the scheduled data is sent, a non-periodic SRS uplink sending indication is transferred to the UE, so as to instruct the UE to send the non-periodic SRS to the system side.

At S4, when uplink sending the data, the UE determines that there is the DMRS configured in the UpPTS to be sent. According to DCI information and non-periodic resources indicated by the high level, the data, the DMRS and non-periodic SRS information are simultaneously sent to the system side.

At S5, the system side uses the non-periodic SRS and the DMRS sent by the UE to obtain the CIR of the uplink data.

At S6, the system uses a CIR value extracted from the non-periodic SRS and the DMRS to obtain the data demodulation information in combination with the received data.

### Second scenario

At S1, the system indicates the UE that it can send data in the UpPTS.

At S2, the system side configures periodic or non-periodic uplink sending resources to the UE.

At S3, when the uplink data is scheduled through the DCI0 or 4, if the system side judges that there is the periodic SRS sent when the scheduled data is sent, the system side tries to put data scheduling resources in a periodic SRS uplink sending frequency band when issuing uplink authorization information, namely the DCI information.

At S4, when uplink sending the data, the UE determines that there is the DMRS configured in the UpPTS to be sent. Then, according to the DCI information and periodic SRS resources indicated by the high level, the data, the DMRS and periodic SRS information are simultaneously sent to the system side.

At S5, the system side uses the periodic SRS and the DMRS sent by the UE to obtain uplink wireless CIR information.

At S6, the system uses the uplink wireless CIR information extracted from the periodic SRS and the DMRS to obtain the data demodulation information in combination with the received data.

### Third scenario

At S1, the system indicates the UE that it can send data in the UpPTS and configures the DMRS to be sent in the UpPTS.

At S2, the system side configures the non-periodic SRS uplink sending resources to the UE, and the periodic SRS uplink sending resources may or may not be configured.

At S3, when the uplink data is scheduled through the DCI0 or 4, if there is no corresponding periodic SRS sent at the same time when the scheduled data is sent, the non-periodic SRS uplink sending indication is transferred to the UE, so as to instruct the UE to send the non-periodic SRS to the system side.

At S4, when uplink sending the data, the UE determines that there is no MRS configured in the UpPTS to be sent. According to the DCI information and the non-periodic resources indicated by the high level, the data and the non-periodic SRS information are simultaneously sent to the system side.

At S5, the system side uses the non-periodic SRS sent by the UE to obtain the CIR of the uplink data.

At S6, the system uses the CIR value extracted from the non-periodic SRS to obtain the data demodulation information in combination with the received data.

### Fourth scenario

At S1, the system indicates the UE that it can send data in the UpPTS.

At S2, the system side configures the periodic or non-periodic uplink sending resources to the UE.

At S3, when the uplink data is scheduled through the DCI0 or 4, if the system side judges that there is the periodic SRS sent when the scheduled data is sent, the system side tries to put the data scheduling resources in the periodic SRS uplink sending frequency band when issuing the uplink authorization information, namely the DCI information.

At S4, when uplink sending the data, the UE determines that there is no DMRS configured in the UpPTS to be sent. Then, according to the DCI information and the periodic SRS resources indicated by the high level, the data and the periodic SRS information are simultaneously sent to the system side.

At S5, the system side uses the periodic SRS sent by the UE to obtain the uplink wireless CIR information.

At S6, the system uses the uplink wireless CIR information extracted from the periodic SRS to obtain the data demodulation information in combination with the received data.

### Third embodiment

In the present embodiment, a data demodulation device is also provided, which is configured to implement the above embodiments and preferred implementation modes. The embodiments and preferred implementations that have been elaborated will not be repeated here. The term "module" used below can realize a combination of software and/or hardware with an intended function. Although the device described in the following embodiment is realized through software better, the realization through hardware or a combination of software and hardware is possible and conceived.

Fig. 4 is a structural block diagram of a data demodulation device according to an embodiment of the present invention. As shown in Fig. 4, the device includes: a receiving module 42 and a determining module 44.

The receiving module 42 is configured to receive, after determining the configuration mode for the DMR in the uplink sending of the UpPTS, the uplink data sent by the UE according to the configuration mode for the DMRS.

The determining module 44 is configured to perform feature extraction on the uplink data, and determine the data demodulation information in combination with the uplink data.

### Fourth embodiment

In the present embodiment, a data demodulation device is also provided, which is configured to implement the above embodiments and preferred implementation modes. The embodiments and preferred implementations that have been elaborated will not be repeated here. The term "module" used below can realize a combination of software and/or hardware with an intended function. Although the device described in the following embodiment is realized through software better, the realization through hardware or a combination of software and hardware is possible and conceived.

Fig. 5 is a structural block diagram of a data processing device according to an embodiment of the present invention. As shown in Fig. 5, the device includes: a processing module 52.

The processing module 52 is configured to determine and transmit to the system side device the corresponding uplink data according to the configuration mode for the DMRS that is determined in the uplink sending of the UpPTS and sent by the system side device. The uplink data is used for the system side device to determine the data demodulation information.

### Fifth embodiment

An embodiment of the present invention also provides a storage medium. The storage medium stores a computer program. The computer program is configured to execute, when running, the steps in any of the above method embodiments.

In an embodiment, in the present embodiment, the storage medium may be configured to store a computer program for executing the following steps.

At S1, after the configuration mode for the DMR is determined in the uplink sending of the UpPTS, the uplink data sent by the UE according to the configuration mode for the DMRS is received.

At S2, the system side device performs feature extraction on the uplink data, and determines the data demodulation information in combination with the uplink data.

Or,
at S3, the corresponding uplink data is determined and transmitted to the system side device according to the configuration mode for the DMRS that is determined in the uplink sending of the UpPTS and sent by the system side device. The uplink data is used for the system side device to determine data demodulation information.

In an embodiment, in the present embodiment, the storage media include, but not limited to, a USB flash disk, a ROM, a RAM, a mobile hard disk, a magnetic disk, a compact disc, and other media capable of storing the computer program.

An embodiment of the present invention also provides an electronic device, which includes a memory and a processor. The memory stores a computer program. The processor is configured to run the computer program, so as to execute the steps in any of the above method embodiments.

In an embodiment, the electronic device may also include a transmission device and an input/output device. The transmission device is connected with the processor, and the input/output device is connected with the processor.

In an embodiment, in the present embodiment, the processor may be configured to execute the following steps through the computer program.

At S1, after the configuration mode for the DMR is determined in the uplink sending of the UpPTS, the uplink data sent by the UE according to the configuration mode for the DMRS is received.

At S2, the system side device performs feature extraction on the uplink data, and determines the data demodulation information in combination with the uplink data.

Or,
at S3, the corresponding uplink data is determined and transmitted to the system side device according to the configuration mode for the DMRS that is determined in the uplink sending of the UpPTS and sent by the system side device. The uplink data is used for the system side device to determine data demodulation information.

In an exemplary embodiment, the specific examples in the present embodiment may refer to the examples described in the above embodiments and alternative embodiments.

It is apparent that those skilled in the art should appreciate that the above modules and steps of the present invention may be implemented by a general-purpose computing device, and they may be centralized in a single computing device or distributed on a network composed of multiple computing devices; in an embodiment, they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present invention is not limited to any specific combination of hardware and software.

The above is only the optional embodiments of the present invention and not intended to limit the present invention; for those skilled in the art, the present invention may have various modifications and changes. Any modifications, equivalent replacements, improvements and the like within the principle of the present invention should fall within the protection scope of the claims of the present invention.

### Industrial Applicability

By means of the embodiments of the present invention, the system side performs feature extraction through the data which is determined by the UE for different configuration modes for the DMRS, so as to determine the data demodulation information, so the problems in the related art of demodulation performance influence and demodulation risk brought about when data demodulation is performed based on a single DMRS or without configuring a DMRS can be solved, thereby achieving the effects of improving the demodulation performance of uplink data and improving the user experience.

## Claims

1. A data demodulation method, comprising:
after determining, by a system side device, a configuration mode for a Demodulation Reference Signal (DMRS) in an uplink data sending of an Uplink Pilot Time Slot (UpPTS), receiving, by the system side device, uplink data sent by a User Equipment (UE) according to the configuration mode for the DMRS; and
performing, by the system side device, feature extraction on the uplink data, and determining data demodulation information in combination with the uplink data.

2. The method according to claim 1, wherein before receiving, by the system side device, the uplink data sent by the UE, the method further comprises:
determining and transmitting to the UE, by the system side device, indication information for indicating Sounding Reference Signal (SRS) uplink sending mode corresponding to the uplink data sent by the UE.

3. The method according to claim 2, wherein the SRS uplink sending mode at least comprise:
a periodic SRS uplink sending mode or a non-periodic SRS uplink sending mode.

4. The method according to claim 3, wherein the indication information is determined at least by the following way:
when the data is scheduled, the system side device judges whether there is a corresponding periodic SRS to send at the same time when the data is sent;
if the judgment result is yes, the system side device sends a periodic SRS uplink sending indication to the UE; and
if the judgment result is no, the system side device sends a non-periodic SRS uplink sending indication to the UE.

5. The method according to any one of claims 2 to 4, further comprising:
configuring, by the system side device, SRS uplink sending resources to the UE.

6. The method according to claim 2, wherein performing, by the system side device, feature extraction on the uplink data comprises:
when the DMRS is configured in the UpPTS, extracting, by the system side device, a Channel Impulse Response (CIR) of the data according to DMRS information and SRS information in the uplink data.

7. The method according to claim 2, wherein performing, by the system side device, feature extraction on the uplink data comprises:
when there is no DMRS configured in the UpPTS, extracting, by the system side device, the CIR of the data according to the SRS information in the uplink data.

8. A data processing method, comprising:
determining and transmitting, by a User Equipment (UE), corresponding uplink data to a system side device according to a configuration mode for a Demodulation Reference Signal (DMRS) that is determined in an uplink sending of an Uplink Pilot Time Slot (UpPTS) and sent by the system side device, wherein the uplink data is used for the system side device to determine data demodulation information.

9. The method according to claim 8, further comprising:
receiving indication information about Sounding Reference Signal (SRS) uplink sending modes which is sent by the system side device; and
determining, by the UE, the DMRS and the SRS in the uplink data according to the indication information and the configuration mode for the DMRS.

10. The method according to claim 9, wherein the SRS uplink sending mode at least comprise:
a periodic SRS uplink sending mode or a non-periodic SRS uplink sending mode.

11. A data demodulation device, which is in a system side device, comprising: one or more processors, and one or more memories for storing one or more program units, wherein the one or more program units are executed by the processor, and the one or more program units comprises:
a receiving module, configured to receive, after determining a configuration mode for a Demodulation Reference Signal (DMRS) in the uplink sending of an Uplink Pilot Time Slot (UpPTS), uplink data sent by a User Equipment (UE) according to the configuration mode for the DMRS; and
a determining module, configured to perform feature extraction on the uplink data, and determine data demodulation information in combination with the uplink data.

12. A data processing device, which is in a User Equipment (UE), comprising: one or more processors, and one or more memories for storing one or more program units, wherein the one or more program units are executed by the processor, and comprises:
a processing module, configured to determine and transmit corresponding uplink data to a system side device according to a configuration mode for a Demodulation Reference Signal (DMRS) that is determined in the uplink sending of an Uplink Pilot Time Slot (UpPTS) and sent by the system side device, wherein the uplink data is used for the system side device to determine data demodulation information.

13. A storage medium, storing a computer program, wherein the computer program is configured to execute, when running, the method according to any one of claims 1 to 7 and 8 to 10.

14. An electronic device, comprising a memory and a processor, wherein the memory stores a computer program, and the processor is configured to run the computer program, so as to execute the method according to any one of claims 1 to 7 and 8 to 10.
